# EUROPÄISCHE PATENTANMELDUNG

(11) **EP 2 405 325 A1**
(43) Veröffentlichungstag der Anmeldung: **11.01.2012**
(21) Anmeldenummer: 11171790.6
(22) Anmeldetag: 28.06.2011
(51) Int. Cl.: G06F 3/01

(54) **Verfahren zur Steuerung einer interaktiven Anzeige**

(30) Priorität: 07.07.2010 AT 11542010
(71) Anmelder: Anderl, Roman Eugenio, 1030 Wien (AT); Kowalewski, Markus, 1140 Wien (AT); Grimm, Ann-Kristin, 23552 Lübeck (DE); Haker, Martin, 23552 Lübeck (DE)
(72) Erfinder: Anderl, Roman Eugenio, 1150 Wien (AT); Kowalewski, Markus, 1160 Wien (AT)
(74) Vertreter: Babeluk, Michael

(57) **Zusammenfassung**

Die Erfindung betrifft ein Verfahren zur Steuerung einer interaktiven Anzeige (4), bei dem Gesten mindestens einer Person (5) durch ein 3D-Kamerasystem erfasst werden, und die Anzeige (4) in Abhängigkeit von den Gesten gesteuert wird. Eine erhöhte Sicherheit in kritischen Umgebungen wird dadurch erreicht, dass durch das 3D-Kamerasystem laufend auch die Entfernung (d) der Person (5) erfasst wird und dass bei Unterschreiten einer Mindestentfernung eine Unterbrechung der Steuerung erfolgt.

## Beschreibung

Die vorliegende Erfindung betrifft gemäß dem Oberbegriff von Patentanspruch 1 ein Verfahren zur Steuerung einer interaktiven Anzeige, bei dem Gesten einer Person durch ein 3D-Kamerasystem erfasst werden, und die Anzeige in Abhängigkeit von den Gesten gesteuert wird.

Es ist bekannt, Videospiele nicht nur durch konventionelle Eingabemedien wie Tastatur, Maus, Joystick oder dergleichen zu bedienen, sondern auch eine Eingabemöglichkeit vorzusehen, die von der Bewegung eines Nutzers abhängt. Dabei wird die Position und Haltung des Benutzers durch Sensoren erfasst, und es wird der Spielablauf in Abhängigkeit von Bewegungen, Gesten oder dergleichen beeinflusst. Auf diese Weise können interessante optische Effekte und eine intuitive Aktion mit einem Computerprogramm ermöglicht werden.

Es ist in diesem Zusammenhang auch bekannt, die Entfernung der Person, die mit dem Computerprogramm interagiert, zu bestimmen. So beschreibt etwa die US 2010/0001994 A ein Eingabeverfahren, bei dem laufend die Entfernung des Benutzers bestimmt wird, um dreidimensionale Bildinformationen an die Entfernung des Benutzers angepasst auszugeben.

Weiters offenbart die WO 2009/144685 A eine Eingabevorrichtung insbesondere für Videospiele, bei der die Gesten von Benutzern erfasst werden. Zur Optimierung der Erfassung kann es bei dieser bekannten Lösung dabei auch vorgesehen sein, eine minimale Entfernung des Benutzers festzulegen. Auf diese Weise kann sichergestellt werden, dass die Eingabe technisch einwandfrei funktioniert.

Die bekannten Eingabevorrichtungen sind dafür ausgelegt, in einem privaten Umfeld wie etwa Wohnungen Videospiele oder dergleichen zu steuern. Die vorliegende Erfindung betrifft jedoch ein Eingabeverfahren, das insbesondere für die Beeinflussung von Darstellungen in einem öffentlichen Raum wie etwa einer U-Bahn-Station geeignet ist. Hier kommen neben technischen Randbedingungen auch noch Sicherheitsaspekte zu tragen. Dabei ist insbesondere davon auszugehen, dass der mit der Darstellung interagierende Benutzer seine Aufmerksamkeit primär auf die Darstellung richtet und dementsprechend Gefahr läuft, sicherheitskritische Bereiche zu betreten.

Aus der US 2010/0150399 A ist ein System zur Erfassung von Gesten bekannt, das als Computereingabevorrichtung verwendbar ist. Dabei wird die Bewegung eines Fingers durch Sensoren erfasst, um eine entsprechende Eingabe zu bewirken. Der Eingabemodus wird abgeschaltet, wenn sich der Finger, der die Eingabe bewirkt, zu weit von der Erfassungseinrichtung entfernt, so dass eine sichere Erkennung nicht mehr möglich ist.

Das System der US 5 796 406 A ist mit der vorliegenden Erfindung nicht vergleichbar, da es hier um die Erfassung von Schriftzügen geht, die mit einem Stift über eine Erfassungsfläche gebildet werden. Es wird dabei die Entfernung der Position der Stiftspitze im aktuellen Zeitpunkt zu der zu einem Anfangszeitpunkt bestimmt.

Die JP 2010/079662 A betrifft ebenfalls eine Vorrichtung zur Erfassung der Gesten von Personen, wobei durch einen Sensor die Entfernung erfasst wird, um zwischen verschiedenen Eingabemodi zu unterscheiden.

Keine der obigen Lösungen ist in der Lage, die Benutzungssicherheit eines Eingabesystems auch unter gefährlichen Bedingungen wie etwa auf Bahnsteigen zu gewährleisten.

Aufgabe der vorliegenden Erfindung ist es, diese Nachteile zu vermeiden und ein Verfahren anzugeben, bei dem eine inhärente Sicherheit auch in kritischer Umgebung gegeben ist.

Erfindungsgemäß werden diese Aufgaben durch die Merkmale von Patentanspruch 1 gelöst. Insbesondere ist vorgesehen, dass durch das 3D-Kamerasystem laufend auch die Entfernung der Person erfasst wird und dass bei Unterschreiten einer Mindestentfernung eine Unterbrechung der Steuerung erfolgt.

Wesentlich an der vorliegenden Erfindung ist, dass es nicht um technische Grenzen für die Erfassung der Person geht, sondern dass die Mindestentfernung zur Unterbrechung der Darstellung eine Sicherheitsfunktion darstellt. So befindet sich beispielsweise die Person am Bahnsteig einer U-Bahn-Station und blickt auf eine Anzeige hinter den Gleisen. Die Mindestentfernung ist dann beispielsweise so eingestellt, dass ein ausreichender Sicherheitsabstand von beispielsweise einem Meter bis zur Bahnsteigkante verbleibt. Eine Beeinflussung der Anzeige ist nur für einen Benutzer hinter der virtuellen Sicherheitslinie möglich. Die Art der Unterbrechung der Steuerung ist auf mehrfache Weise darstellbar. Im einfachsten Fall wird lediglich die Möglichkeit der Beeinflussung der Darstellung unterbunden. Es kann aber auch die Darstellung selbst geändert werden, indem beispielsweise zusätzlich die Helligkeit gedrosselt wird. Im Extremfall wird die gesamte Darstellung unterbrochen, um eine besonders intensive Warnwirkung zu erzielen. Alternativ ist es auch möglich, eine visuelle oder akustische Warnmeldung wie etwa "Bitte zurücktreten" einzublenden.

Zusätzlich zu der vorgegebenen Mindestentfernung kann in bevorzugter Weise auch eine Maximalentfernung vorgesehen sein, bei deren Überschreitung eine Unterbrechung veranlasst wird, wenn beispielsweise an der gegenüberliegenden Seite des Bahnsteigs ebenfalls eine Bahnsteigkante gegeben ist.

Eine besonders begünstigte Variante der Erfindung sieht vor, dass gleichzeitig die Gesten mehrerer Personen erfasst werden. Dadurch ist es möglich, vor einer großen Projektionsfläche mehrere Personen gleichzeitig an der Gestaltung der Darstellung teilnehmen zu lassen, wobei dies nicht nur separat für jede Person in einem getrennten Bildbereich möglich ist, sondern auch die Interaktion verschiedener Personen zulässt. Insbesondere kann in diesem Zusammenhang vorgesehen sein, dass für jede Person in einem Erfassungsbereich die Entfernung gesondert erfasst wird und zumindest für diese Person eine Unterbrechung der Steuerung und/oder die Ausgabe einer Warnmeldung erfolgt. Dadurch wird eine wesentlich effizientere Sicherheitsfunktion ermöglicht, da beispielsweise Warnmeldungen auf der Anzeige genau dort platziert werden können, wo die Interaktion der betreffenden Person stattfindet.

Eine weitere bevorzugte Ausführungsvariante des erfindungsgemäßen Verfahrens sieht vor, dass laufend die Bewegungsgeschwindigkeit der Person erfasst wird und dass eine Prognose über die Entfernung der Person berechnet wird und dass bei Unterschreiten eines Mindestwerts der Prognose eine Unterbrechung der Steuerung erfolgt. Auf diese Weise ist es nicht nur möglich, statisch die Unterbrechung von der jeweils vorliegenden Entfernung zu veranlassen, sondern auch die Bewegungsgeschwindigkeit und -richtung mit zu berücksichtigen. Wenn die Mindestentfernung beispielsweise auf einen Meter hinter der Bahnsteigkante festgelegt ist, so kann festgelegt werden, dass für einen Benutzer, der sich noch 1,5 m hinter der Bahnsteigkante befindet, sich jedoch mit einer Bewegungsgeschwindigkeit von 1 m/s in Richtung Bahnsteigkante bewegt, ebenfalls ein gefährlicher Zustand erkannt wird, der zur Unterbrechung der Darstellung führt. In diesem Fall wird nämlich prognostiziert, dass in voraussichtlich 0,5 Sekunden die als sicher erachtete Mindestentfernung unterschritten werden wird.

Vorzugsweise ist vorgesehen, dass laufend die Gesten mehrerer Personen erfasst werden, um die Anzeige zu beeinflussen, wobei jeder Person ein Beeinflussungsfeld zugeordnet wird, das die Person beeinflussen kann, und dass für jede Person getrennt die Entfernung erfasst wird, um bei Unterschreiten einer Mindestentfernung bzw. gegebenenfalls bei Überschreiten einer Maximalentfernung eine Unterbrechung der Steuerung für die betreffende Person zu bewirken.

Ein besonders bevorzugter Aspekt der vorliegenden Erfindung liegt darin, dass mehrere Benutzer gleichzeitig auf die Anzeige einwirken können. Der Begriff Beeinflussungsfeld im obigen Sinn kann einen räumlichen Aspekt aufweisen, wenn nämlich jedem Benutzer ein Bildschirmbereich zugeordnet wird, in dem der Benutzer Veränderungen bewirken kann. Es kann aber auch ein thematisch inhaltliches Beeinflussungsfeld vorliegen, indem einem bestimmten Benutzer beispielsweise eine Figur, also ein Avatar, am Bildschirm zugeordnet wird, der vom Benutzer gesteuert werden kann. Auf diese Weise können zehn oder mehr Benutzer gleichzeitig auf die Anzeige einwirken. Dabei kann der Bewegungsbereich für die einzelnen Benutzer zu groß sein, um diesen mit einer einzigen Kamera abzudecken. In einem solchen Fall können seitlich nebeneinander mehrere Kameras zur Beobachtung der Benutzer und zur Erfassung ihrer Gesten vorgesehen sein.

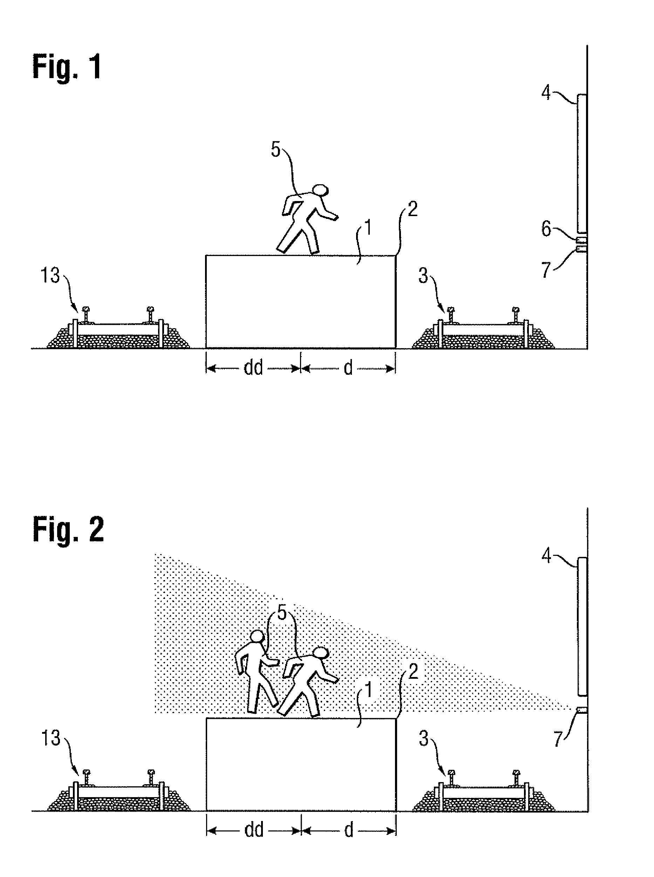

In der Folge wird die vorliegende Erfindung anhand der in den Figuren dargestellten Ausführungsbeispiele näher erläutert. Die Fig. 1 und Fig. 2 zeigen schematisch alternative Anordnungen zur Durchführung des erfindungsgemäßen Verfahrens.

Gemäß Fig. 1 ist auf einem Bahnsteig 1, beispielsweise einer U-Bahn-Station, hinter einer Bahnsteigkante 2 ein Bahngleis 3 vorgesehen. Oberhalb des Bahngleises 3 ist eine Anzeigeeinrichtung 4 angeordnet, die beispielsweise als LCD-Panel ausgebildet sein kann oder aber auch als Projektionsleinwand, auf die über einen nicht dargestellten Videoprojektor ein entsprechendes Bild projiziert wird. Auf den Bahnsteig 1 steht eine Person 5 der Anzeige 4 gegenüberliegend. Der Abstand zur Bahnsteigkante 2 ist mit d gekennzeichnet. An der gegenüberliegenden Seite des Bahnsteigs 1 ist ein weiteres Gleis 13 vorgesehen, wobei der Abstand dd von diesem Gleis 13 ebenfalls überwacht wird.

Erfindungsgemäß erfolgt die Bestimmung der Entfernung d über ein 3D-Kamerasystem 7 (z.B. basierend auf time-of-flight, Stereoskopie oder structured light), das die Gesten der Person 5 erfasst und zur Beeinflussung der Darstellung aufnimmt.

Zusätzlich kann dieser Abstand d über einen Sensor 6 unter Berücksichtung der Breite des Gleiskörpers 3 überwacht werden. Die Messung kann über Ultraschall, Infrarot oder beliebige andere Verfahren erfolgen.

Fig. 2 unterscheidet sich von Fig. 1 dadurch, dass mehrere Personen 5 gleichzeitig die Darstellung beeinflussen können. Außerdem wird hier die Entfernung d bzw. dd über das 3D-Kamerasystem 7 bestimmt.

Bei der Darstellung kann es sich beispielsweise um Standbilder oder aber auch um Videos handeln, die zwei oder mehr Layers aufweisen. Ein Layer ist dabei unbeeinflussbar von der Person und durch ein zweites Layer abgedeckt, die von der Person 5 beeinflusst werden kann. So kann etwa die Darstellung von Schnee, Sand oder dergleichen in dem zweiten Layer durch entsprechende Handbewegungen des Benutzers 5 weggewischt werden, um den Blick auf den darunterliegenden ersten Layer freizugeben.

Die Entfernung d wird während des Betriebs der Vorrichtung laufend erfasst und bei Unterschreiten eines vorbestimmten Mindestwerts wird die Steuerung unterbrochen. Gegebenenfalls können Warnhinweise ausgegeben werden.

## Patentansprüche

1. Verfahren zur Steuerung einer interaktiven Anzeige (4), bei dem Gesten mindestens einer Person (5) durch ein 3D-Kamerasystem erfasst werden, und die Anzeige (4) in Abhängigkeit von den Gesten gesteuert wird, **dadurch gekennzeichnet, dass** durch das 3D-Kamerasystem laufend auch die Entfernung (d) der Person (5) erfasst wird und dass bei Unterschreiten einer Mindestentfernung eine Unterbrechung der Steuerung erfolgt.

2. Verfahren nach Anspruch 1, **dadurch gekennzeichnet, dass** bei Unterschreiten einer Mindestentfernung (d) zusätzlich eine Warnmeldung eingeblendet oder akustisch ausgegeben wird.

3. Verfahren nach einem der Ansprüche 1 oder 2, **dadurch gekennzeichnet, dass** auch bei Überschreiten einer Maximalentfernung eine Unterbrechung der Steuerung erfolgt.

4. Verfahren nach einem der Ansprüche 1 bis 3, **dadurch gekennzeichnet, dass** gleichzeitig die Gesten mehrerer Personen erfasst werden.

5. Verfahren nach Anspruch 4, **dadurch gekennzeichnet, dass** für jede Person in einem Erfassungsbereich die Entfernung gesondert erfasst wird und zumindest für diese Person eine Unterbrechung der Steuerung und/oder die Ausgabe einer Warnmeldung erfolgt.

6. Verfahren nach einem der Ansprüche 1 bis 5, **dadurch gekennzeichnet, dass** laufend die Bewegungsgeschwindigkeit der Person (5) erfasst wird und dass eine Prognose über die Entfernung der Person (5) berechnet wird und dass bei Unterschreiten eines Mindestwerts der Prognose bzw. gegebenenfalls bei Überschreiten eines Maximalwerts der Prognose eine Unterbrechung der Steuerung erfolgt.

7. Verfahren nach einem der Ansprüche 1 bis 6, **dadurch gekennzeichnet, dass** laufend die Gesten mehrerer Personen (5) erfasst werden, um die Anzeige (4) zu beeinflussen, wobei jeder Person (5) ein Beeinflussungsfeld zugeordnet wird, das die Person (5) beeinflussen kann, und dass für jede Person getrennt die Entfernung (d) erfasst wird, um bei Unterschreiten einer Mindestentfernung bzw. gegebenenfalls bei Überschreiten einer Maximalentfernung eine Unterbrechung der Steuerung für die betreffende Person (5) zu bewirken.
